# EUROPEAN PATENT APPLICATION

(11) **EP 1 978 488 A2**
(43) Date of publication of application: **08.10.2008**
(21) Application number: 08006745.7
(22) Date of filing: 02.04.2008
(51) Int. Cl.: G07B 3/00

(54) **Apparatus for use at a point of sale for dispensing at least first and second different tickets**

(30) Priority: 05.04.2007 US 784263
(71) Applicant: Mothwurf, Ewald, A-8043 Graz (AT)
(72) Inventor: Mothwurf, Ewald, A-8043 Graz (AT)
(74) Representative: Manitz, Finsterwald & Partner GbR

(57) **Abstract**

An apparatus for use at a point of sale comprises a ticket dispenser, especially but not exclusively for lottery tickets. The ticket dispenser has at least one store for receiving at least first and second different tickets, a mechanism for issuing said tickets from said at least one store and a first customer operated input device for inputting a request to said apparatus for the issuing of at least one ticket. The apparatus further comprising a second sales person operated input device optionally integrated into a cash till at the point of sale, or into software associated with said cash till, said sales person operated device being for granting or rejecting a request input by the customer at said apparatus, or for granting a verbal request by a customer, and for communicating the granting or rejecting of the request to said apparatus. There is a connection permitting communication of at least one of said apparatus and said second input device with said cash till thus permitting sale of one or more tickets to be added to a customers purchase list.

## Description

The present invention relates to an apparatus for use at a point of sale and having a ticket dispenser with at least one store for receiving at least first and second tickets and for subsequently dispensing said tickets to a customer.

An apparatus of this kind is disclosed in US 6,578,735 B1 the content of which is incorporated herein by reference.

The invention underlying the aforementioned US patent is based on the recognition that many customers purchase scratch card type lottery tickets at points of sale, for example at cash tills of supermarkets or large stores and engage, of their own volition, in games of chance. The invention described there recognized that that type of behavior can be exploited to great effect as an advertising medium. The US patent describes how the interests of a lottery company can be promoted as well as the interests of any manufacturer of any product or brand. This can be done either in connection with the manufacturer or in connection with the sales promotion of a store, or chain of stores, or indeed of any sales outlet, be it a tie shop in an airport or a newspaper shop on the corner.

One element of the invention described in US 6,578,735 B1 was thus the concept that an automatic dispensing apparatus should be provided which is able to issue lottery tickets or to permit a customer to participate in a game of chance related to a promotional activity. For example, if the customer purchases a particular item from a store and this particular item is being promoted, then the purchase of the item - as recognized by the barcode scanner at the point of sale - can be used as an entitlement to permit the customer to participate in a game of chance organized by the store with a win or a ticket relating to a win being issued from the same apparatus as a lottery ticket.

The idea behind the apparatus described in US 6,578,732 B1 was that, if promotion is done in the way described, customers will purchase the relevant products because, in addition to acquiring the product, they can also participate in a game of chance. Thus, the apparatus described in US 6 578 735 B1 was conceived to be able to issue diverse types of tickets to a customer, for example tickets in fanfold form or roll form.

For this purpose, in the apparatus described in US 6,578,735 B1 there are one or more dispensing slots provided at one side of the apparatus and each dispensing slot is associated with a compartment having shafts containing two types of tickets, which can be the same or different. One feeding mechanism is able to feed tickets from either of the two shafts to a dispensing mechanism which is able to dispense tickets from either shaft to a dispensing slot. The apparatus described in US 6,578,735 B1 includes a compact but efficient mechanism for ticket feeding, ticket manipulation and ticket separation from stores of tickets in web or fanfold form.

Other apparatus for dispensing tickets and in particular for separating them from rolls or stores of tickets are also known, for example from US patents 6,056,289, 6,293,424 B1, 6,161,743 and 5,836,498 to name just a few.

In addition, vending machines for lottery tickets are also known and, for example, are available from the company GTECH.

In this connection it should be noted that there are various types of lottery products which can be sold and dispensed using the apparatus of the present invention. First of all there are the so-called scratch tickets where the customer is required to scratch away part of a ticket to reveal hidden combinations of numbers (henceforth only combination), which is either a winning combination or non-winning combination. Such scratch tickets come in various formats, for example widths typically in the range from 70 mm to 100 mm and lengths typically in the range from 50 mm to 200 mm. An alternate form is a so-called pull tab ticket where a second card layer is stuck on the base card and can be pulled off to reveal a hidden combination.

Furthermore, there are draw tickets where the customer fills in one or several boards with numbers on the lotto slip. For example with lotto in Germany each board is filled with 6 numbers out of 49 which are printed on the ticket in rows. A quick version to play is the so-called quick-tip ticket. Here, a customer decides how many plays he wishes to make - for example four such plays - and for each play a random number generator generates a combination being a sequence of six numbers selected at random from the numbers 1 to 49. The computer generated random numbers are then printed on a lottery ticket held in the dispensing apparatus, e.g. in roll form, and issued as a lottery ticket showing, in this example, four different rows of six numbers selected randomly from the numbers 1 to 49. A draw is then subsequently made (typically two times a week) and the customer can check whether the numbers he has obtained, i.e. the sequences of six numbers selected at random match the six numbers drawn. If so, he has a winning ticket. The customer then typically goes back to the point of sale to collect his winnings.

There are various variations on such games. For example with Euromillions there is the possibility of selecting five numbers from fifty plus two further "star" numbers which are chosen from the numbers 1 to 9.

It is one object of the present invention to provide the lottery player with the possibility to play or give preference to certain favorite numbers. For example, his favorite numbers may be 7 and 14 and he may also have a tendency to favor numbers such as 21 and 28 (the numbers do not have to be a multiple of 7). In this case, the computer includes the numbers 7 and 14 when generating his lottery sequence and also preferentially tends to numbers 21 and 28 while nevertheless generating the numbers of the sequence other than 7 and 14 randomly. The numbers are entered by the sales person on his device and printed onto tickets of lottery paper in the form of a two-dimensional barcode or in numerical form. Such "Favorite Number Tickets" can also be in fanfold form rather than in the form of roll paper or in the form of separate tickets or cards. Each time the customer purchases a ticket he can hand the sales person his "Favorite Number Ticket" and then receives a lottery ticket with his favorite numbers.

Moreover, there are gaming products which can be considered to be individual cards. One such type of card is a break open card, which basically has several layers which can be opened by breaking off one or two ends by the player to reveal a pre-printed combination of numbers, which may be a winning or a non-winning combination. In this case, the winning combinations have been decided in advance, in just the same way as for scratch cards. Such break open cards and scratch cards are frequently opened or scratched by the customer at or close to the point of sale and again any winnings are normally collected by the customer at the point of sale, or at the store at which the card which issued. Also it is possible to place bets and receive tickets specifying the bet made, for example the so-called "oddset" bet on a particular sports event winning at particular odds. There are also special number draw games which are drawn daily, such as "Keno" in Germany and "Toitoitoi" in Austria.

In addition, it should be mentioned there are in most jurisdictions laws relating to the organization of lottery games and the sale of lottery tickets. Generally speaking, the sale of lottery tickets to minors is prohibited and this makes it difficult to provide automatic dispensing machines for lottery tickets, because then there is no control of the age of persons purchasing the lottery tickets. In some legislations it is permitted to have a vending machine for lottery products placed within view of a sales person so that the sales person can check the age of persons purchasing tickets if he or she believes them to be under age. However, this is not very satisfactory, there are many times when the person involved is busy with other activities or serving other customers and is just not able to exercise the degree of control required.

It is an object of the present invention to provide an apparatus for issuing at least first and second different tickets, typically but not exclusively lottery tickets, in both customer self service and sales person service, which enables a more stringent control of the age of the persons purchasing the tickets. It is a further object of the present invention to provide a more flexible apparatus for the issuing of different types of tickets, in particular lottery tickets and in particular to enable the integration of such an apparatus into a point of sale in a store. It is a further object of the invention to provide an apparatus for dispensing different types of tickets which is compact, mechanically efficient and can be constructed at a favorable price and which also allows ready integration into the systems operated by a store or other sales outlet.

In order to satisfy these objects there is provided an apparatus for use at a point of sale comprising a ticket dispenser having at least one store for receiving at least first and second different tickets, a mechanism for issuing said tickets from said at least one store and a first customer operated input device for inputting a request to said apparatus for the issuing of at least one ticket, said apparatus further comprising a second sales person operated input device optionally integrated into a cash till at the point of sale, or into software associated with said cash till, said sales person operated device being for granting or rejecting a request input by the customer at said apparatus, or for granting a verbal request by a customer and for communicating the granting or rejecting of the request to said apparatus and a connection permitting communication of at least one of said apparatus and said second input device with said cash till permitting sale of one or more tickets to be added to a customers purchase list.

Such an apparatus is operated in the following manner. It is installed at the point of sale so that a ticket requested by the customer can be issued either to the customer or to the sales person associated with the point of sale and then passed to the customer. Thus, a customer being served at a point of sale can operate the customer operated input device at the apparatus to request the issue of one or more tickets of a selected type or types. The person operating the cash till at the point of sale recognizes that a ticket has been requested and can operate a device to grant or reject the request by the customer. Thus, if an under age customer requests a ticket, the sales person can prevent this request being granted by the apparatus so that no ticket is issued to the under age person.

Equally, if a mother and child are present at the point of sale and if the mother is loading her shopping trolley, possibly simultaneously talking to someone else or pursuing some other activity, and if the child -without the mothers approval - presses the request for a lottery ticket, then the sales person can either reject this request or discusses the validity of it with the parent and only allow the request if the parent is in agreement therewith. Furthermore, a customer at the point of sale can also simply ask the sales person for a particular lottery ticket or product. The sales person can select the type of ticket requested and can issue it via the apparatus either directly to the customer or to himself, in which case he hands it to the customer or places it with the customer's other purchases.

If the customer wishes to participate in a draw using his favorite or preferred numbers, then the sales person can enter these numbers into a keypad provided for this purpose at the "sales person operated device" or at the keyboard of the cash till if the latter is configured for this operation. In this case, the customer operated apparatus can issue, in addition to the lottery ticket requested, a card on which the customer's favorite numbers and/or preferred numbers are stored. The next time the customer requests such a lottery ticket, he can then hand this card to the sales person and the favorite and/or preferred numbers can be read in automatically by a scanner, either a dedicated scanner at the keypad or a separate barcode scanner used by the sales person in connection with the sale of goods.

Certainly, a system of this kind allows the sales person at the cash till to control whether or not tickets are issued to minors.

A further advantage of the apparatus in accordance with the invention is that the cost of the tickets is automatically incorporated into the customs bill at the point of sale, i.e. added into the purchase price for the other goods that he has purchased. Thus, the financial transaction at the apparatus is handled electronically in precisely the same way as the purchase of goods by the customer so that the store's or outlets' financial systems are not affected in any way. There is no need for a separate handling of money and essentially no delay caused by the purchase of a lottery ticket in addition to other goods or services.

Another situation which could arise is that one customer is collecting his purchases while another customer standing at the point of sale is waiting for his purchases to be scanned by the sales person. If this other customer requests one or more lottery tickets while the previous customer is still being served, then this request is not granted by the sales person at the sales person operated device until the previous customer's purchase transaction has been completed. Thus, the sales person can directly prevent the transaction by the other customer being added to the first customer's bill.

Moreover, the apparatus can in principle also be used for commercial activities in the way described in the aforementioned US patent 6,578,735 B1. It can also be used to issue other tickets not related to a lottery. E.g. it could be used to issue cinema tickets, or plane or other travel tickets purchased by a customer at the store or outlet. It could also be used to print and/or dispense cards granting a rebate on certain products or some other gratuity.

Generally the apparatus will have a customer side and a sales person side with a first outlet having a first output direction for the tickets in the store of the ticket dispenser to the customer side and a second outlet with a second output direction for the tickets in the store of the ticket dispenser to the sales person side. This is a particularly convenient arrangement making the tickets readily accessible to the customer and the sales person as required.

It is particularly convenient if the apparatus includes a printer associated with said store for applying printing to a ticket before issuing said ticket. This provides great flexibility for the issuing of quick-tip tickets and lottery tickets for participation in a draw which cannot be fully preprinted.

The store preferably has a plurality of channels each adapted to receive first and second different tickets, a respective printer being associated with at least one form of ticket in at least one of said channels.

The apparatus is preferably provided with a conveyor device so that the first and second tickets of each said channel can be issued into the conveyor device for further transport to said customer side or to said sales person side, said conveyor device being pivotable to issue a ticket in either of said first and second directions. Thus, one conveyor device can be used to issue two different tickets or like tickets from either of the two shafts in either the first or second direction.

The conveyor device is preferably operable to move tickets forwardly and backwardly to permit issue of a relatively long ticket in either of said first and second directions. Thus, a small modification of the conveyor device achieves a significant benefit with little additional complexity.

A parting mechanism is preferably provided upstream of said conveyor device and adapted to part endless ticket webs of said first and second tickets. This enables tickets to be easily separated from an endless roll or a fanfold pack.

The tickets can be selected from the group comprising endless ticket webs in perforated roll form, endless ticket webs in perforated fan fold form, endless ticket webs in non-perforated roll form, endless ticket webs in non-perforated fanfold form and separated tickets in stack form. The apparatus is thus able to handle a large variety of different ticket types.

The ticket webs and tickets can be in one of preprinted form, printable form and preprinted and printable form. This again provides great flexibility in use.

Each channel preferably has a separate magazine. Thus, the store in the apparatus for the tickets is conveniently realized issuing separate magazines each preferably containing two different packs of tickets either in the same form or in different form. The use of magazines is not just convenient from a handling viewpoint, but also from the point of view of security and ticket validation.

With such an arrangement, a printer is conveniently integrated into said magazine for applying printing to a ticket before issuing said ticket. This again provides flexibility and is useful for ticket validation purposes.

A scanner is preferably provided in at least one of said ticket dispenser, said sales person input device and said cash till to permit scanning of rejected tickets (if the customer changes his mind or if a wrong ticket is issued) and for scanning of winning tickets and cards carrying favorite and/or preferred numbers.

The ticket dispenser preferably comprises a main body, a shaft supporting said main body, said main body incorporating a ticket handling mechanism, a ticket printing mechanism, a customer input device, a SIM card storing the installation and/or revenue data for the apparatus and electrical connections for power, networking and communication with said device and said cash till, and said scanner and said shaft carry mating electrical connections for removable attachment to the first said connections associated with said main body, there being a mechanically releasable connection between said main body and said shaft whereby said main body and associated components can be exchangeably connected to said shaft, said SIM card being transferable from one main body to another.

This design makes it easy to exchange one apparatus for another in flexible manner while being a secure, theft-proof design.

The main body holds at least one removable magazine and said removable magazine is transferable to an exchange ticket dispenser mountable on said shaft. This again provides great flexibility in use.

The mechanically releasable connection between said ticket dispenser and said shaft is preferably only accessible when at least one said magazine is removed from said main body.

The main body preferably includes an electronically latchable mechanism for releasably latching the or each said magazine to said main body, said electronically latchable mechanism being activatable by a smart card.

The invention will now be described in more detail by way of example only and with reference to the accompanying drawings in which
- Fig. 1: shows a plan view of a typical check-out lane at a retail store or supermarket showing an apparatus in accordance with the invention installed adjacent to the cash till between the cash till and a conveyor belt with the customer's purchases,
- Fig. 2: shows a plan view of an apparatus in accordance with the invention installed adjacent a front desk, for example a sales desk at a gasoline station or some other sales outlet,
- Fig. 3: shows a perspective view of an apparatus in accordance with the invention similar to the apparatus incorporated in Figs. 1 and 2, but having three magazines instead of the two magazines of the apparatus of Figs. 1 and 2,
- Fig. 4: is a perspective view of an input device operated by a sales person,
- Fig. 5: is a cross-section of the apparatus of Fig. 3 on the section plane III-III of Fig. 3 with two fanfold ticket packets incorporated in the respective longitudinally sectioned shaft,
- Fig. 6: is a sectional view of an apparatus in accordance with the invention, with the shaft incorporating a fanfold ticket pack on one side and a roll of paper at a second side,
- Fig. 7: is a further cross-sectional view similar to Fig. 5 but through a shaft adapted to dispense individual cards disposed at one side of the shaft and roll paper at the other side of the shaft,
- Fig. 8: is a further cross-section through an apparatus in accordance with the invention adapted to dispose cards from both sides of the shaft,
- Fig. 9: is an enlarged view of an enlarged portion of the apparatus at the bottom of the shaft in Fig. 6 showing short tickets being issued from the paper roll or from the pack of fanfold tickets to the customer side of the apparatus,
- Fig. 10: is a view showing the issue of short tickets from the paper roll or from the pack of fanfold tickets to the sales person side of the apparatus at the start of the issuing process,
- Fig. 11: is a view similar to Fig. 10 but showing the issue of short tickets to the sales person side of the apparatus at the completion of the issuing process,
- Fig. 12: is a view similar to Fig. 9 but illustrating the first phase of the issuing of a long ticket from the pack of fanfold tickets to the customer side of the apparatus,
- Fig. 13: is a cross-section similar to Fig. 12 showing a second phase of the issuing of a long ticket to the customer side of the apparatus,
- Fig. 14: is a further view similar to Figs. 12 and 13 showing the actual issue of the ticket into the ticket issuing tray,
- Figs. 15, 16 and 17: are Figures similar to Figs. 12, 13 and 14 but showing different phases of the issue of a long ticket from a pack of fanfold tickets to the sales person side of the apparatus,
- Fig. 18: is a top view of the apparatus of the invention with three magazines as shown in Fig. 3 but with the magazines removed,
- Fig. 19: is another perspective view of the apparatus of Fig. 17 but after removal of the cover and as seen in the direction of the arrow XIX in Fig. 18 and
- Fig. 20: is a view of the apparatus of Figs. 18 and 19 with the cover removed and as seen in the direction of the arrow XX in Fig. 19,
- Fig. 21: is a schematic diagram illustrating the linking of a front desk, for example in accordance with Fig. 2, to a retail head office by modem, with the apparatus in accordance with the invention being linked to the till via a scanner fusing box,
- Fig. 22: is a similar diagram to Fig. 21 but showing the apparatus of the invention linked to the till via a TCP/ IP link,
- Fig. 23: is a view similar to Fig. 21 but with the connection to the head office being made by a VPN link,
- Fig. 24: is a view similar to Fig. 23 but with the apparatus of the invention being linked to the till by TCP/IP and
- Figs. 25 to 27: are Figures similar to Figs. 21, 23 and 24 respectively but showing a plurality of points of sale in a retail store rather than simply a front desk.

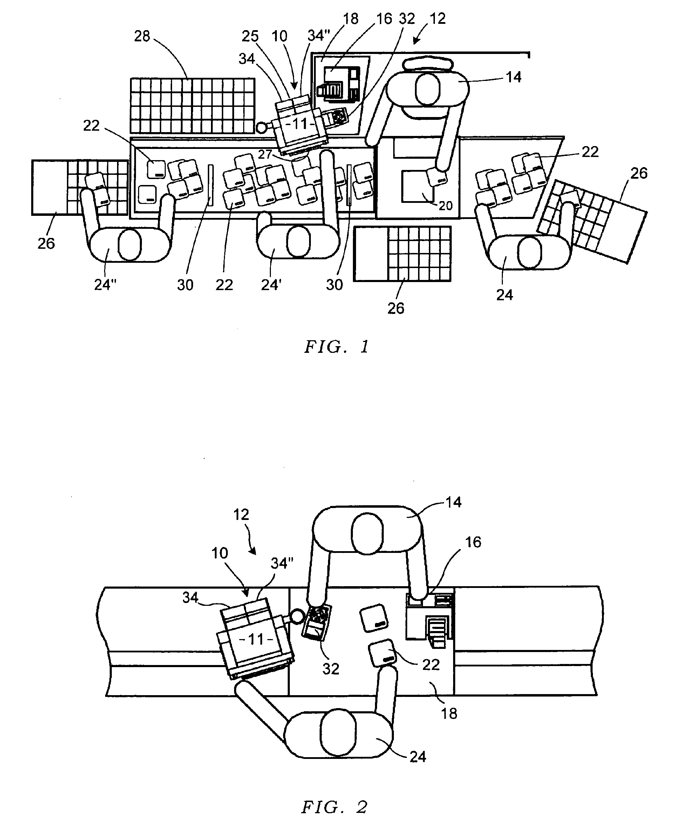

Turning now to Fig. 1 the apparatus 10 in accordance with the invention is shown at a point of sale 12 in the form of a check-out lane of a retail store or supermarket. The important items of the apparatus 10 are the ticket dispenser 11 and the keypad 32. In this drawing the reference numeral 14 represents the sales person or cashier, the reference numeral 16 represents the cash till mounted on a cash desk 18, 20 is the usual barcode scanner used for scanning the barcode present on diverse purchases such as 22 made by individual customers 24, 24', 24" and 26 are shopping trolleys, used by the customers, 28 is a rack containing various products such as for example cigarettes, and 29 are bars which enable one customer to separate his purchases from those of another customer.

The operation of the apparatus of Fig. 1 will now be explained generally, the detailed description of the individual items will follow later.

The customer 24 has essentially completed his purchase of products 22 at the cash till and is about to load the products into his shopping trolley 26. If the customer realizes he would like to have played a game of lottery of one kind or another, he asks the cashier 14 to issue him a lottery ticket. This the cashier can do by entering the customer's wish on his special keypad 32 whereupon the ticket dispenser 11 receives an electronic communication from the keypad 32 to issue the desired lottery product or products. Generally, since the customer 24 is positioned away from the ticket dispenser 11, the cashier 14 will indicate, by an input to his keypad 32, that this lottery product is to be issued to him at the sales person side of the ticket dispenser 11 and will then take the lottery product involved from the ticket dispenser 11 and hand it to the customer. Actually, the ticket dispenser 11 could be orientated so that the sales person side 25, i.e. the rear side opposite to the front customer side 27, faces more towards the sales person 14. There is no need for the sales person 14 to scan the lottery product at the barcode scanner 20because the selection of that product through the keypad 32 automatically leads to the product purchased being added to the list of purchases by the customer 24.

The customer 24' who is waiting to have his goods checked by the sales person 14 may also wish to participate in a lottery of some kind and enters via keys provided at the front of the ticket dispenser 11, which will be explained in more detail later, the precise lottery product or products he or she desires to receive. In this case the cashier or sales person 14, once he or she has finished serving the customer 24, can see that the customer 24' is of age and can press the requisite button at his keypad 32 to have the lottery products issued directly to the customer, once that customer is being served by the sales person. Again there is no need for the sales person to scan the lottery products purchased via the bar scanner 20, because the lottery products purchased have automatically been communicated to the cash till 16 and already form part of the customer 24's total purchase list.

Should the customer 24' be accompanied by a minor who presses buttons at the ticket dispenser 11 requesting the issue of lottery products, the sales person or cashier can check with the customer, generally the parent, whether or not the parent approves of this sale. If so the lottery products are issued to the customer at the customer side of the ticket dispenser 11 as before. If not, the sales person can prevent the issue of the tickets requested by the minor by an appropriate entry at the keypad. The cost of the product is not then added to the customer's bill - and of course the customer does not receive the products in question. Should the customer 24' himself be a minor, then the cashier again can prevent the issue of the lottery products pointing out to the person concerned that they are not of age and that he or she is not permitted to allow the sale of lottery products to persons who are not of age.

Fig. 2 shows a similar situation, but here at a front desk 18, such as might be found at a gasoline station or in some other form of shop not equipped with check-out lanes. In this embodiment, the same reference numerals are used as in Fig. 1 where appropriate, i.e. items in Fig. 2 having the same function as in Fig. 2 or being the same as the items in Fig. 1, are identified by the same reference numerals.

Thus, in this case, also the sales person 14 has a keypad 32 and the ticket dispenser 11 is provided to the right of the sales person. In this case the customer 24 will normally select the lottery product or products he requires by pressing the buttons at the customer side of the ticket dispenser 11 and the sales person can authorize the issue of tickets to him at the customer side of the ticket dispenser 11 by using the keypad 32. Again the lottery products purchased are automatically added to the customer's bill at the cash till, for example to the bill he receives for tanking a certain amount of gasoline. Again, should the person 24 be accompanied by a minor who plays with the ticket dispenser 11, the sales person 14 can check with the customer 24 whether he approves of the lottery products being issued. If so, then the issue can take place as before to the customer, if not, the transaction can be stopped by the sales person via his keypad and of course the products are not issued and are also not added to the customer's bill.

Should an under age person come to the filling station and seek to purchase lottery products via the ticket dispenser 11, the sales person 14 recognizing that the purchaser is under age can prevent the sale of such lottery products.

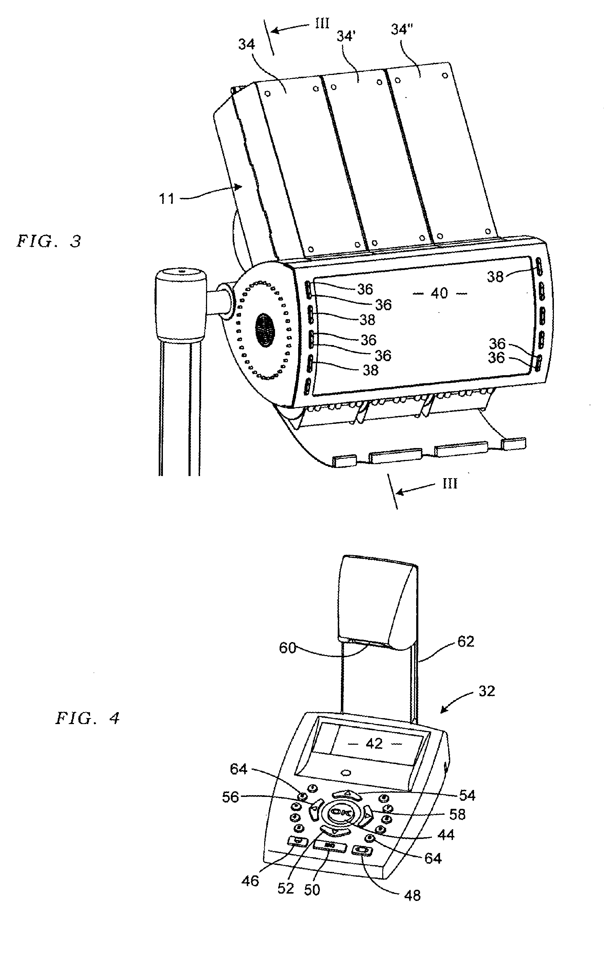

Turning now to Figs. 3 and 4, the ticket dispenser 11 and the keypad 32 are now shown in detail. As seen in the perspective view of Fig. 3, the ticket dispenser 11 is essentially a dispensing machine for lottery products and has in this example three shafts 34, 34' and 34", in comparison to two shafts 34 and 34' in Figs. 1 and 2. Each shaft is actually designed, as will be explained later, to hold two sets of products which can either be identical or different. At the front of the ticket dispenser 11 there are, at the left and at the right, in each case ten switches or keys 36. These are actually push button switches arranged in pairs, with each pair of switches being separated by a common illuminated bezel 38. The push button switches are, however, completely independent of one another and can be actuated separately to select a respectively associated product displayed alongside it on a front screen 40 of the ticket dispenser 11. Each switch is thus associated with a different lottery product or other products, e.g, a specific railway ticket or plane ticket, and the relevant product desired can be selected by the customer by pressing the associated switch 36. In a manner, which will be explained later, this act of selection of the product is then communicated to the sales person via an electronic link from the ticket dispenser 11 to the keypad 32 and the sales person can then decide to authorize the issue of the product involved or not to authorize it. If he authorizes it, he can either issue it directly to the customer at the customer side of the ticket dispenser 11, if the customer is still standing opposite to or close to the ticket dispenser 11, or can issue it to himself at the sales person's side of the ticket dispenser 11, i.e. at the rear side 25 (shown in Fig. 2). He can then hand the product to the customer 24. Fig. 4 shows the keypad 32 which the sales person has for carrying out these transactions. The keypad 32 has a screen 42 which shows the sales person which product the customer has selected. If the sales person approves of the sale of the product to the person in question, then he presses the OK button 44 and also one of the two buttons 46 and 48 to the left and right at the bottom of the keypad, which decide whether the lottery product or products involved are to be issued to the customer at the customer side of the ticket dispenser 11 (button 46) or to the sales person at the sales person side of the ticket dispenser 11 (button 48). Should the sales person decide that the ticket should not be issued because he suspects that the purchaser is under age, then he can press the NO button 50 and this inhibits the issue of a ticket and cancels the transaction so that the customer is not charged for a product he has not received.

It is also possible for a customer, possibly at the end of his purchases, to ask the sales person to issue him with a ticket, e.g. in a situation in which the customer is no longer located in front of the ticket dispenser 11 and is no longer able or wishes to select his own product via the switches 36. The cashier can then use directly the number buttons 64 (numbers 0 to 9) corresponding to the ten front side switches 36 or the up/down and right/left buttons 52, 54, 56 and 58 to select the lottery products requested by the customer. The selection is again displayed on the screen 43 so that it can be checked by the sales person and he can then press the button to issue the products involved to himself at the sales person side 25 of the ticket dispenser 11. In this case the products are again added onto the customer's bill and the cashier hands the products involved to the customer.

Other circumstances are conceivable. For example the customer can request the ticket either verbally or by pressing the switches 36 on the ticket dispenser 11 and the cashier or sales person can issue the ticket only to find that the customer changes his mind, possibly because he does not have enough money with him or for some other reason. In this case the sales person can take the product involved and can pass it below the scanner head 60 shown on the vertical column 62 at the back of the keypad 32. This scanner head scans the coding present on the ticket involved and then deletes it from the customer's list of purchases. Also, in case of a draw ticket, the sale is marked as an invalid sale in the central lottery system and a cancellation ticket is produced and attached to the ticket concerned and stowed away. The issue of a win for such a ticket is automatically prevented once it is scanned in as an invalid sale. In case of a scratch card this card is stowed away and offered to the next customer.

The scanner 60 incorporated in the keypad 32 can also be used in other circumstances. For example, if a customer has a winning ticket, for example a scratch card, then the winning ticket is handed to the sales person who scans in via the scanner a barcode on the scratch ticket and enters the number that has been revealed. The respective win is printed as credit on the sales slip and can be offset against the costs of the customer's purchases, and a balance paid to the customer if it is a monetary win, or handed over in the form of a physical prize.

If the lottery product selected by the customer is a lottery ticket with numbers which entitle the customer to participate in a draw made later, then, if the ticket is a winning ticket, the customer can again go to the sales outlet where he purchased the ticket and can allow it to be scanned in via the scanner. The company organizing the lottery can then decide how the customer will receive his prize. For small prizes this may be done by a payment made at the cash till, for larger prizes the winner may be required to go to a special outlet to receive the prize in question.

Also, some customers who participate in lottery draws have a card listing their favorite and/or preferred numbers and they can hand this to a cashier who again scans in the relevant numbers at the scanner 60, so that they are taken into account in generating the numbers for the lottery ticket that is issued to the customer. For example, certain favorite numbers can always be selected and the random number generator that generates the remaining random numbers can be influenced to preferentially treat the other favorite numbers.

If the customer does not have a card listing favorite and/or preferred numbers, then he can tell these numbers to the sales person who enters them at the number buttons 64 (numbers 0 to 9). This act not only triggers the issue of a lottery ticket at the ticket dispenser 11, which can take account of the favorite and/or preferred numbers, but can also be used to issue a special card to the customer listing his favorite and/or preferred numbers so that, for a future purchase, he can hand the card to the sales person for scanning. Indeed, a fresh card can be issued each time the customer submits an old one.

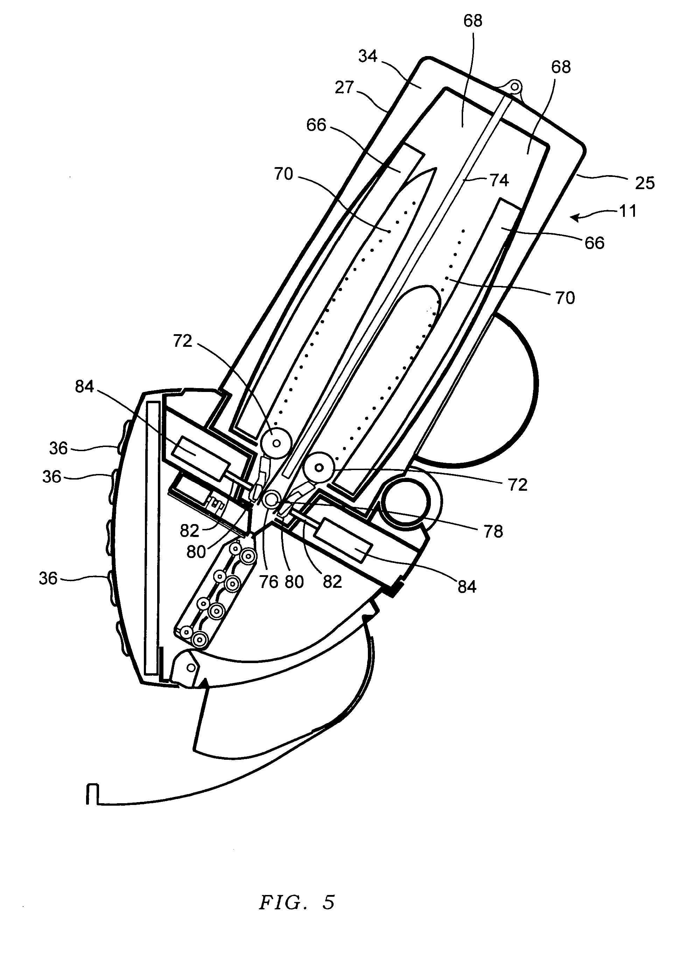

The operation of the ticket dispenser 11 when dispensing various types of product will now be described in more detail with reference to Figs. 5 to 17. Turning now to Fig. 5 there can be seen a section through the shaft 34 which contains two separate lottery products in the form of fanfold tickets, i.e. tickets which are joined together at their ends in the manner of a concertina.

Fig. 5 shows an ticket dispenser 11 in accordance with the invention where the shaft 34 is adapted to dispense fanfold tickets, with one ticket pack 66 being held in each of two half magazines which make up the shaft. Each ticket packet is held by a pair of spring-loaded walls 68 fitted with rows of bristles 70 to resiliently urge the tickets in the respective pack together. As seen in Fig. 5, each of the two halves of the magazine has free running rollers 72 disposed adjacent a central partition wall 74 of the shaft. These rollers, which are part of the removable magazine, serve to guide the tickets, which pass between each roller 72 and the wall 74, make it easy for a person to insert the free ends of the tickets into the area alongside the central conveyor roller 76, between it and a respective sliding guide 80. Thus the free ends of the tickets adopt the position shown in Fig. 5. The conveyor roller 76 is a rubber roller provided on a central drive shaft 78. The tickets stop, i.e. the front edges of the tickets on either side of the central roller stop at a light barrier which prevents further movement thereof until a customer requests the issue of a ticket. This will be explained in more detail later. In the position shown in Fig. 5 the free ends of the tickets from the two halves of the magazines are lightly urged against the roller 76 of the central drive shaft 78 by the respective spring-loaded sliding guides or guide walls 80 which are urged into engagement with the free end of the respective ticket by respective spring-loaded plungers 82.

When a customer requests issue of a ticket from one of the packs by pressing the respective switches 36, a DC motor-driven linear gear 84 activates the plunger 82, and with this the sliding guide 80 so that the respective ticket is pressed harder against the rubber roller 76 of the drive or conveyor shaft 78. The drive shaft 78 and thus the conveyor roller 76 is driven by a stepper motor (not shown) via a gear and indeed in either a clockwise or anticlockwise direction in order to dispense the particular ticket requested by the customer. It should be noted that the drive shaft extends over the full length of the ticket dispenser 11 and that only the ticket is issued which is urged harder by the motor-driven plunger 82 against the roller 76 to effect issue thereof.

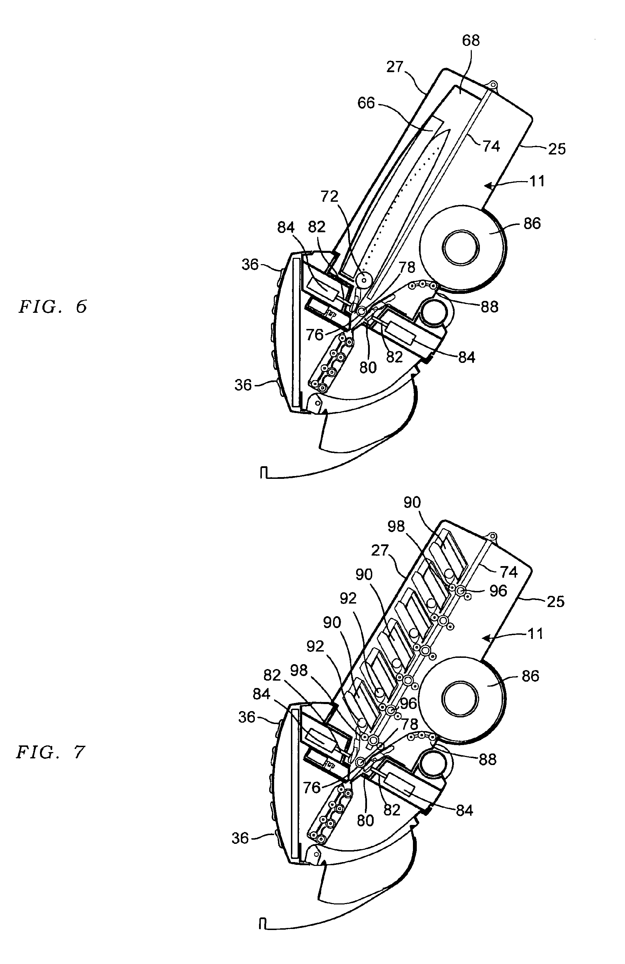

Before describing the further process of issuing a ticket, reference will now be made to Figs. 6, 7 and 8 which show arrangements similar to that of Fig. 5 but now have shafts 34 with different products arranged therein. In the apparatus of Fig. 6 the shaft 34 contains two different lottery products, one in the form of fanfold tickets 66, for which the situation is precisely the same as has been described with reference to Fig. 5, and the other for roll tickets. The roll of tickets 86 is mounted at the sales person side 25 of the apparatus and the tickets pass over guide rollers 88 and the sliding wall 80 into the vicinity of the rubber roller 76 of the drive shaft 78. Again the leading ticket from the roll of tickets 86 is urged against the rubber roller 76 of the drive shaft 78 by a spring loaded plunger 82, which can also be actuated by a linear motor 84 to press the tickets in roll form against the roller 76. Thus, on driving the conveyor roller 76 in the appropriate clockwise direction, tickets can be issued from the paper roll.

Fig. 7 shows another arrangement which in this case has tickets in roll form precisely as shown in Fig. 6 but, instead of having tickets in fanfold form, it has tickets 90 in card form at the customer side 27 of the shaft 34. If the customer selects a product which is present in card form then the relevant card is issued. For example the bottommost ticket from the bottom group of cards 90 is issued, by a roller 92 engaging the bottommost ticket and rotating clockwise to force it out of the ticket pack, past the guide roller 96 at the central wall and into the gap between the guide 80 acted on by the spring-loaded plunger 82 and the conveyor roller 76 on the drive shaft 78. A further driven roller 98 can cooperate with the free running roller 96 to guide and deflect the respective card. If cards are taken from other packs higher up the shaft 34, then they can be transferred from one roller pair 96, 98 to the next. By rotating the drive shaft 78 in the anticlockwise direction (as seen in Fig. 7) the respective ticket can then be forwarded further for issue to the customer or to the sales person in a manner which will later be described.

Once the cards in say the lowermost stack of cards at the left hand side of Fig. 7 have been dispensed, then the next cards to be dispensed are taken from the stack above it and so on, until all cards have been dispensed and the magazine has to be replaced. Of course, replacement might be necessary earlier if the paper roll runs out first.

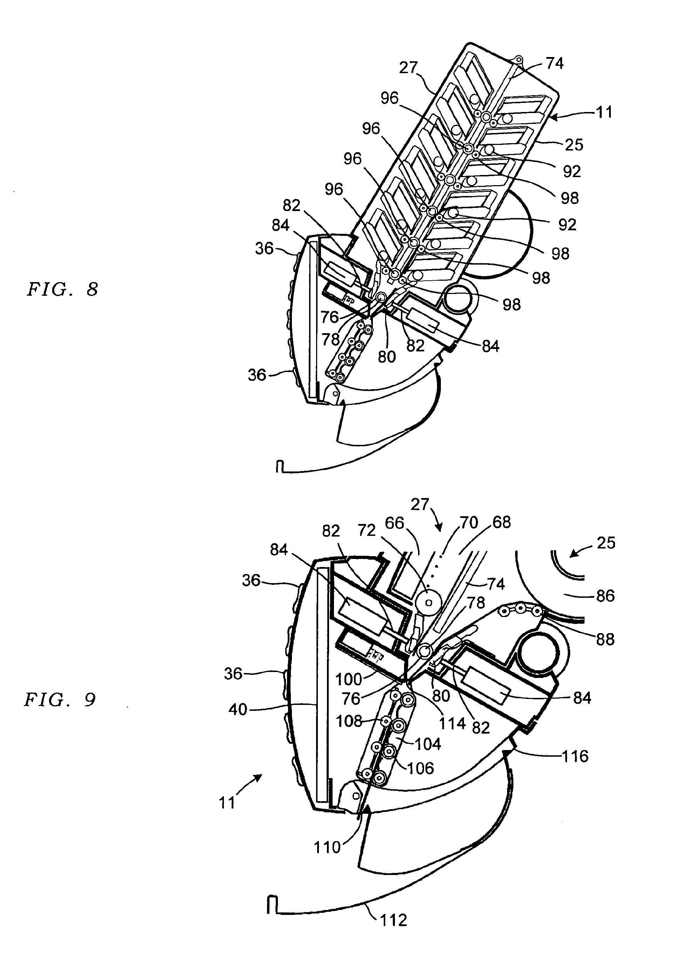

Fig. 8 shows an arrangement in which the shaft is adapted to dispense only cards and thus the arrangement at the customer side of the shaft is a mirror image of the arrangement at the sales person side. In this example a ticket is being issued from the third stack at the sales person side. It can be seen from Fig. 8 how the ticket is progressively moved down the right-hand side of the central wall (in Fig. 8) between the roller pairs 96, 98 until it eventually passes between the spring-loaded guide 80 and the conveyor roller 76 on the drive shaft 78 which, for the issue of tickets from the sales person side 25 of the ticket dispenser 11, is rotated in the clockwise direction.

As mentioned above, fanfold tickets can come in various lengths and the issue of short fanfold tickets will now be described with reference to Figs. 9, 10 and 11 which assume an arrangement as shown in Fig. 6, i.e. with fanfold tickets 66 at the customer side of the apparatus and tickets in roll form 86 at the sales person side.

As can be seen from Fig. 9, the leading end of the next fanfold ticket to be dispensed is guided between the roller 72 and the central wall 74 and is pressed lightly against the conveyor roller 76 on the drive shaft 78 by the spring-loaded guide plunger 82. When a customer selects this particular ticket and the sales person approves the issue of it, the linear motor 84 associated with the plunger is then driven to press the ticket harder against the conveyor roller 76. The drive shaft 78 is driven in the anticlockwise direction to move the ticket between itself and the spring-loaded and motor urged guide 80, and indeed for a distance which is controlled by knowing the position of the leading edge of the ticket being dispensed. As will be explained later, the ticket to be issued has previously been stopped by the drive mechanism as it occludes a light barrier (not shown). By rotating the drive shaft 78 and thus the conveyor roller 76 under the influence of the control of the processor (not shown) associated with the ticket dispenser 11, i.e. by energizing the stepping motor for the drive shaft 78, the conveyor roller 76 can be turned by an amount sufficient for the join between the ticket to be issued and the next following ticket to be located adjacent the blade 100, which may be a blunt blade or a sharp blade, depending on the precise severing device that is selected, which serves to sever the leading ticket to be issued from the following ticket.

Thereafter, the drive direction of the drive shaft is reversed with the ticket still pressed against the conveyor roller 76 on the drive shaft 78 by the spring-loaded sliding guide 80 so that the ticket is retracted until the light barrier is just freed again and the free end of the next ticket is now located in the position shown in Fig. 9. After the leading ticket has been separated it is advanced further by the pivotable flap and conveyor roller arrangement 104 provided downstream of the cutting blade 100. As shown in Fig. 9 the leading ticket is issued by rotation of the driven rollers 106 of the pivotable flap (which are each disposed opposite to a respective spring loaded freely rotatable guide roller 108) through a slot 110 at the customer side 27 of the ticket dispenser 11. It then falls into the dispensing tray 112 so that it can be taken by the customer.

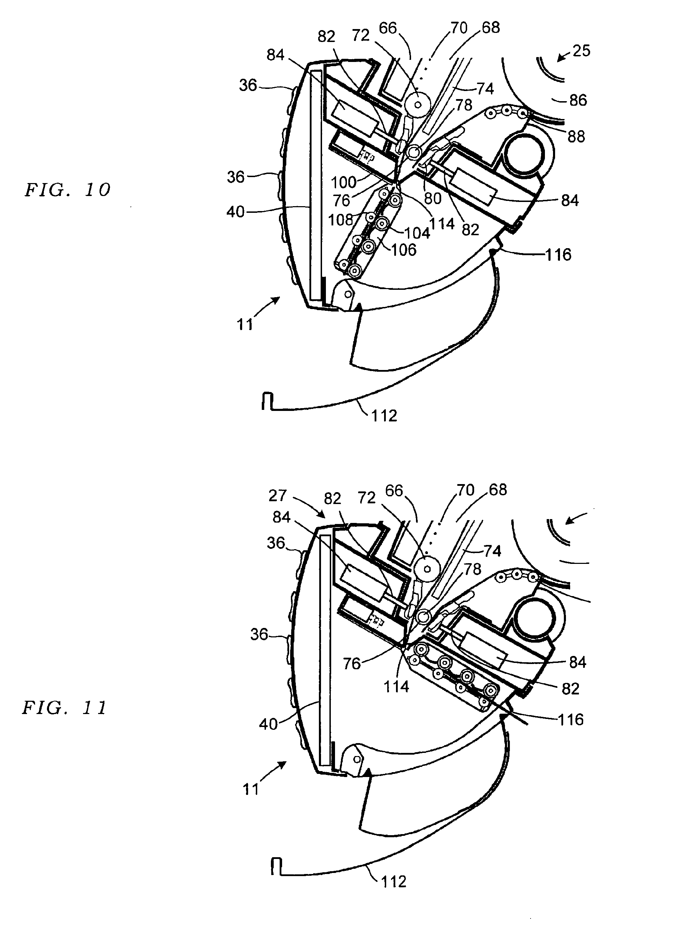

If the sales person decides that the ticket is to be issued to the sales person at the sales person side of the apparatus, then the procedure which is followed is initially generally similar to that described above with reference to Fig. 9, but is terminated as shown in Figs. 10 and 11. In Fig.10 the ticket to be issued is fully received within the conveyor device, i.e. is trapped between the driven rollers 106 and the guide rollers 108 of the pivotable flap 104 such that the leading end of the ticket to be dispensed is still within the apparatus and the trailing end of the ticket has just left the motorized blade 100 which is used to sever it. It can be seen from Fig. 11 that the pivotable conveyor device 104 used for the final phase of the issue of the ticket is actually pivotally mounted about a horizontal axis 114 located adjacent the end of the cutting device 100 and thus it can be swung in accordance with Fig. 11 from the position of Fig. 10 to the position shown in Fig. 11. The drive rollers 106 of the conveyor device can subsequently be energized to issue the ticket through the slot 116 at the sales person side of the apparatus.

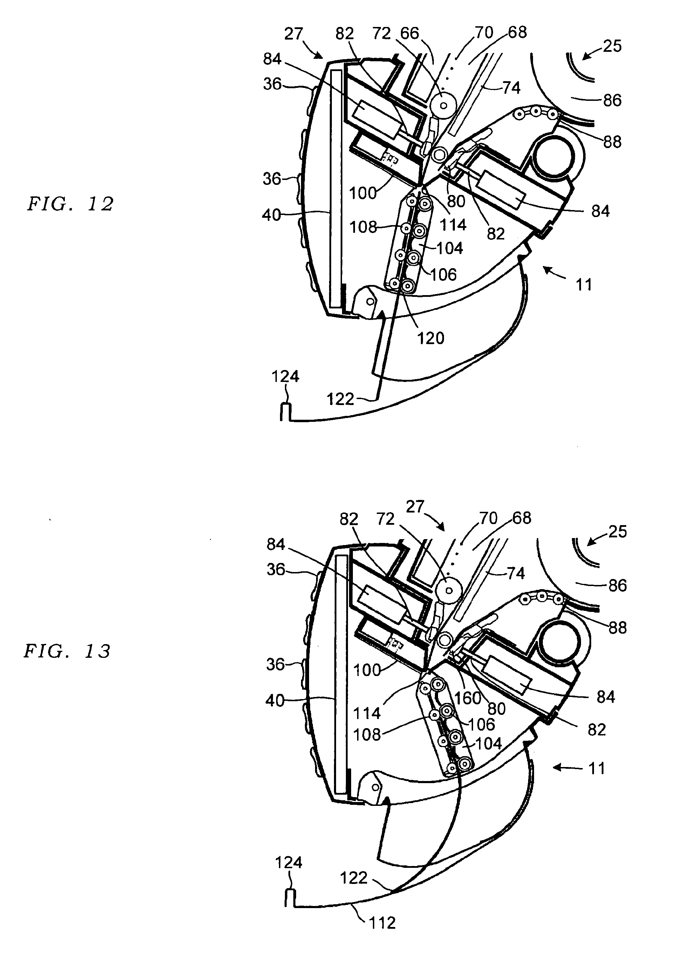

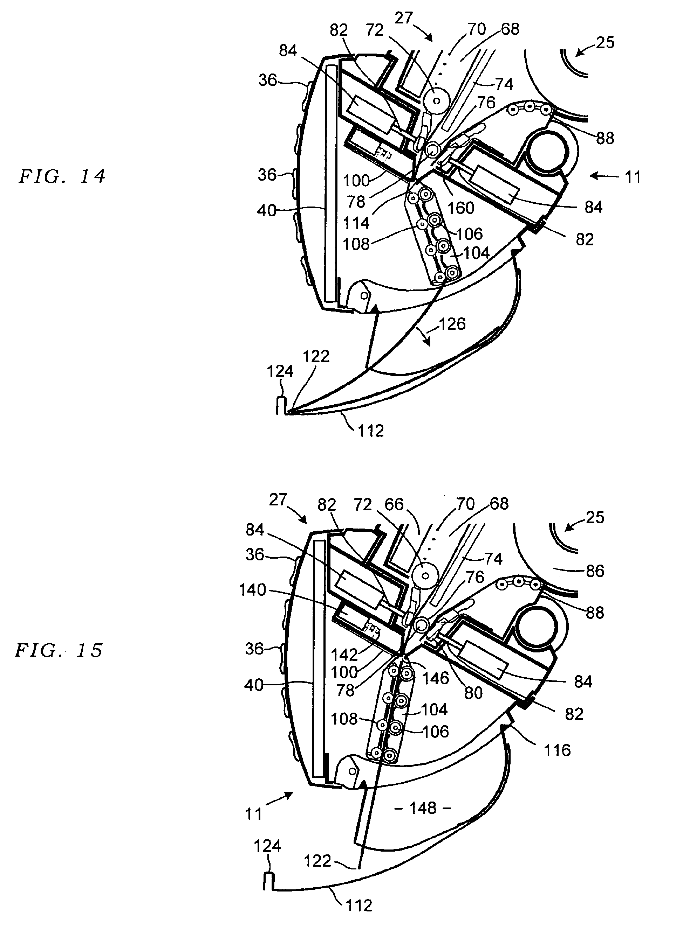

If a long ticket is involved, then this is dispensed in the manner described with reference to Figs. 12, 13 and 14. Here the ticket is fed into the pivotable flap and conveyor device 104 and pushed out beyond the free end 120 of this conveyor device 104 until the free end of this ticket is located just above the tray 112 at the customer side 27 of the ticket dispenser 11. For this, the pivotable flap and conveyor device 104 is swung to a position slightly different from the position shown in Fig. 9. Thereafter, the conveyor device is swung further in the anticlockwise direction, with its driven rollers 106 being driven so that the ticket is bent somewhat and progressively moved into the tray 112, i.e. such that its leading edge 122 moves up to the stop 124 at the end of the issue tray 112. A second long ticket is also shown in the tray 112 by way of illustration. In this case the customer requested two tickets. This situation is reached in Fig. 14 at which point the long fanfold ticket is released by the pivotable flap and conveyor device 104 and falls in accordance with the arrow 126 onto the bottom of the tray from where it can be taken by the customer.

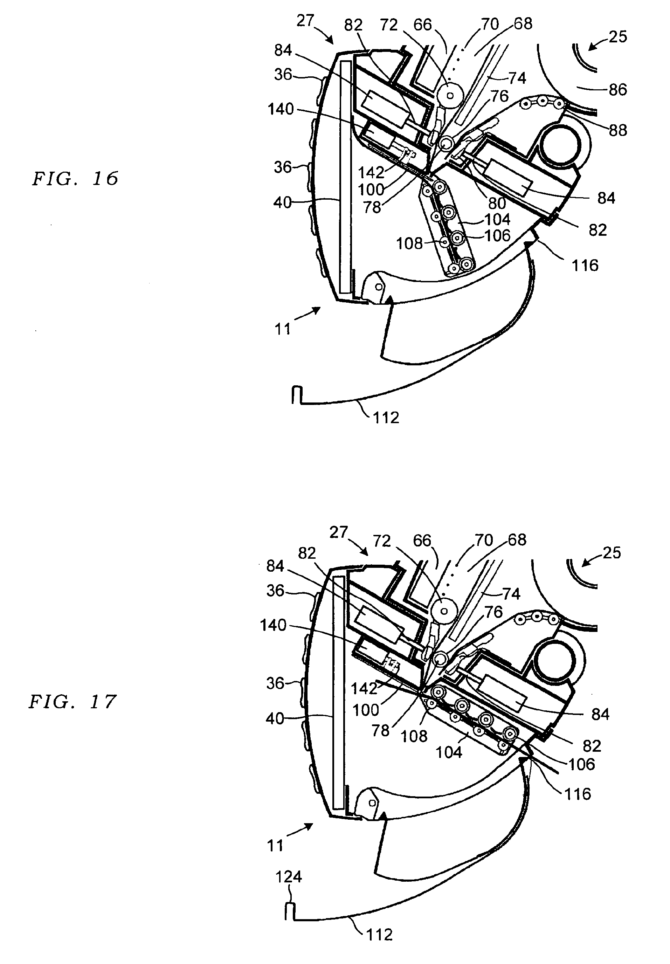

If it is desired to issue a long ticket to the sales person side 27 of the ticket dispenser 11, then this is done in the manner illustrated with reference to Figs. 15, 16 and 17. The position shown in Fig. 15 essentially corresponds to the position shown in Fig. 12. However, once this position is reached, i.e. the ticket has been moved through the pivotable flap and conveyor device 104 until the trailing end is positioned just downstream of the knife blade 100, the conveyor device 104 is swung in the anticlockwise direction to the position shown in Fig. 16 and the direction of rotation of the rollers 106 of the conveyor device are reversed so that the trailing end of the ticket moves underneath the knife blade 100 up against the back of the front panel 40 of the apparatus, with the leading edge 122 of the ticket now being inside the conveyor device 104. The conveyor device 104 is then pivoted further into the position shown in Fig. 17 and the direction of rotation of the drive rollers 106 thereof is then reversed once again so that the leading edge of the ticket and subsequently the whole ticket is issued through the slot 116 at the sales person side 25 of the ticket dispenser 11.

If a ticket is to be issued from the roll 86 of endless tickets, then this can be done in precisely the same manner as for a long ticket or a short ticket, depending on the length of the ticket, the only difference being that the leading ticket is now urged against the conveyor roller 76 on the drive shaft 78 by the action of the linear motor 84 associated with the plunger 82 at the right-hand side of the drive shaft 58. Depending on the length of the individual tickets which are to be drawn from the roll, they can be treated either as a short ticket or as a long ticket. Thus, the same basic mechanism of ticket issue can be used irrespective of whether one is dealing with a long ticket or a short ticket which is drawn from the roll of tickets.

Should the apparatus be used with cards as shown in Figs. 7 or 8, then the cards are equivalent to short tickets and are issued in the same way as has been described for short fanfold tickets with respect to Figs. 9, 10 and 11 so that it is not necessary to repeat this description here. The only difference with the issue of card-type tickets, once they have been delivered to the conveyor roller 76, is that the cutting operation is no longer necessary because the card-type tickets are separated from one another at the outset. Thus, the cutting blade 100 can be kept in a parking position.

A slightly more detailed explanation of the movement of the tickets will now be given.

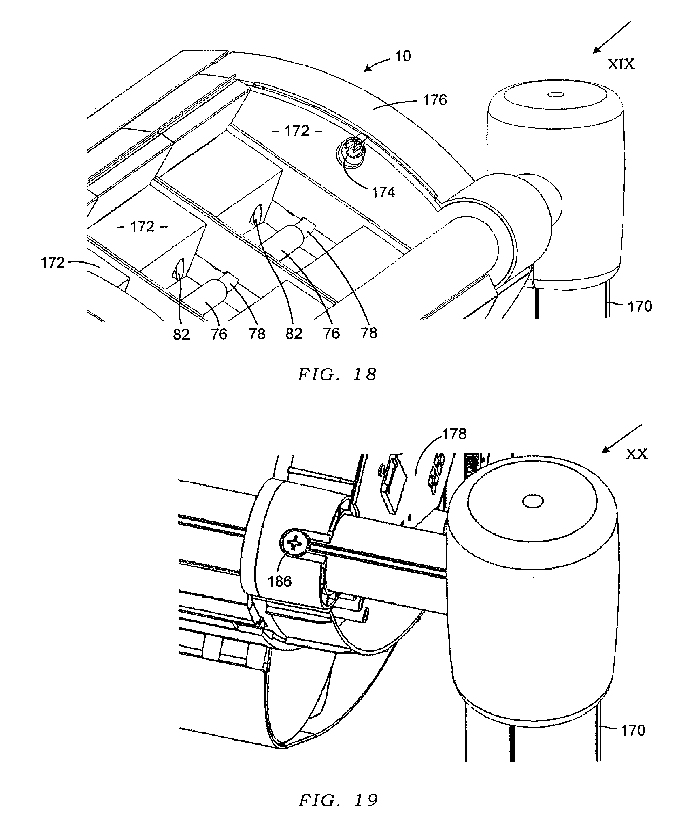

A ticket pack 66 is e.g. stored in each of the two half magazines as shown in Fig. 5 and held by the pair of spring-loaded walls 68 fitted with bristles 70. The top pack lies on the row of bristles. The free ends of the leading tickets of each pack are positioned to extend just into a light barrier (not shown but positioned with the beam of the light barrier extending just below the free ends of the leading tickets in Fig. 5. They are held in position by the spring-loaded sliding wall 68 when the plunger 82 is in the parking position. This parking position is well within the magazine as can be seen in Fig. 18 so that the operator is also able to remove and refit the magazine. Once the magazine has been inserted, the spring-driven plunger 82 is released and thus clamps the respective tickets from the two fanfold packs 66 lightly against either side of the conveyor roller 76 on the drive shaft 78. The DC motor driven linear gears 84 associated with the plungers 82 are driven in turn, and with this the respective guides 80, so that the ticket from each ticket run, i.e. from each fanfold pack, is pressed against the conveyor roller 76 in turn. As mentioned earlier, the conveyor roller 76 can be driven either in a clockwise direction (for dispensing tickets from the right-hand pack 66) or anticlockwise (for dispensing tickets from the left-hand pack 66) by a stepper motor via a gear (not shown). The direction of rotation can also be reversed to withdraw the respective ticket engaged with the conveyor roller under pressure from the respective guide 80.

The conveyor roller 76 can thus be activated to move the ticket strip backwards by a small amount until the light barrier, which should normally be interrupted, opens and a few further steps for security and then stops. There is a separate light barrier for each ticket strip. Once the issuing process starts, the rubber conveyor roller 76 is activated to rotate either in the left-hand direction or right-hand direction, depending on which plunger 82 has been activated, to press the respective ticket from one or other of the two ticket packs 66 harder against the conveyor roller 76, which then moves the tickets downstream for a sufficient distance until the respective light barrier is interrupted again, from which point on the ticket moving distances can be accurately determined. The ticket strip, i.e. the leading ticket, is then further advanced into the issuing flap 104. The issuing flap, which pivots and issues the ticket, is pivoted by a second stepper motor and the movement of the ticket within the issuing flap 104 is achieved by the four rubber transport rollers 106 and spring-loaded counter rollers 108. The transport rollers 106 are driven by a gear and a DC motor (not shown), at a speed slightly higher than the speed set by the conveyor roller 76. However, the driving of the transport rollers 106 is less strong so that the conveyor roller 76 with the drive shaft 78 is the master of the movement. The ticket separating blade 100 or separator knife is made of laser cut and stamped sheet metal which is typically of flat arrow tip shape but relatively blunt at the leading edge. The separator 100 slides on rails in a molded plastic gear box, is driven by a DC motor and a linear gear 140 and has three different positions determined by three light barriers 142, namely a parking position, a full travel position and a half travel position for the spooling back of long tickets as described above. The separator is well guided in the gear box for precise hitting of the ticket strip at the perforation at which the strip of tickets was positioned, so that a full ticket is separated in each case at the trailing end of the ticket where the perforations are located.

During the issuing process, the ticket strip is advanced by the conveyor roller 76 associated with the drive shaft 78 until the perforation along which the ticket is to be separated is positioned a few millimeters outside of the exit end of the outlet mouth 146, which is located at the axis 114 of the pivotable issue flap 104. The extent of this movement is determined by the electronic control for the drive shaft driving the conveyor roll. Thereafter the pivoting and issuing flap bends the ticket by a single anticlockwise movement. The bending is enforced by a short downward movement of the ticket strip. Thereafter the conveyor roll 76 is rotated in the opposite direction to pull the ticket back until the bend edge, i.e. the bend apex at the perforations, stops at a bezel (the outlet mouth 146) where, due to the stiffness of the ticket material and the limited friction force of the conveyor roller 76 bearing on the ticket strip, the ticket strip cannot be pulled back further. The conveyor roller 76 is then reversed again and positions the web forward a short distance until the bend edge is placed at the position of the separator blade 100. This sequence of return movement and repeated forward movement allows the precise positioning of the perforation and synchronizes the perforated edge, i.e. the leading edge 122 of the next ticket so that it always comes to rest at the same position. The ticket handling operation is now continued in that the pivoted flap conveyor device 104 is moved back to the straight position further weakening the perforation.

In order to actually separate the leading ticket from the strip of tickets at the perforation, the separator 100 is advanced along the guide driven by the DC motor and gear 140 sufficiently to separate the leading ticket from the web of tickets at the perforation. The separator has a flat arrow-tip shape and is well guided so that the protruding centre of the separator hits the perforation at which the strip of tickets was positioned. During this movement of the separator, the ticket strip is clamped between the conveyor roller 76 and the guide wall 80 and the leading ticket is clamped between the transport rollers 106 and the counter rollers 108.

Tickets, which are longer than about 100 mm, extend beyond the pivoted flap 104 when the perforation is at the separating position. The flap is pivoted in a position so that the ticket can be spooled into the cave 148 between the pivoted issue flap 104 and the front tray 112. During the bending, the long ticket has adequate room to move within the cave 148.

During the dispensing to the customer side of tickets up to 100 mm long, the issuing flap has already been pivoted into a position such that the separated ticket is ejected through the front slot and is falling into the front tray 112. At the time of ejecting the separated ticket, the ticket strip still connected to the ticket pack 66 is moved backwards so that the new leading ticket is in the parking position ready for the issue of another ticket.

For tickets longer than about 100 mm, the front dispensing is done by pivoting the flap clockwise into the position of Fig. 12 and then anticlockwise to the position shown in Fig. 13 while the ticket is further advanced and slides along the tray 112 to the front of the tray 112.

For dispensing short tickets, i.e. tickets up to about 100 mm long to the sales person side 25 of the apparatus, the issuing flap 104 is pivoted anticlockwise to the rear side ejection slot 116 where the ticket is issued.

For the issuing of tickets which are longer than 100 mm to the rear side of the ticket dispenser 11, i.e. to the sales person side 25, the leading ticket has first to be scrolled backwards by the issuing flap 104 and is then ejected through the slot 116. The separator moves backwards to a middle position which still covers the bezel but which still gives the issuing flap 104 ample space for pivoting half way to the position shown in Fig. 16. Once this position of the ticket has been reached, the ticket is spooled backward until the leading edge of the ticket passes a leading edge detector (not shown) on the flap 104 and the flap is then pivoted anticlockwise to the opening at the rear side. The ticket is ejected and is held by a spring-loaded fin (for example spring-loaded by a polyester sheet spring) so that it can readily be grasped and removed by the sales person, but does not fall to the floor.

It should be noted that some of the products which can be issued with the ticket dispenser 11 of the present invention are pre-printed, whereas others need to have printing applied to them or additional printing applied to them. In order to do this, each magazine half which is issuing tickets which require printing has a thermal print head 160 which is integrated into the guide 80 and a respective printer controller (not shown) is also provided in the respective magazine. Each magazine can be fitted with up to two printing heads (one for each half of the magazine). It is not essential for the ticket dispenser 11 to include one or more printing heads. This is only necessary where tickets, such as lottery tickets, train tickets or airplane tickets, need to have printing applied to them.

The subject matter to be printed onto the respective lottery products is a function of the particular lottery product involved. For example, if a customer wishes to participate in a draw, for example 6 from 49, then the print head will be energized to print the lottery ticket including the numbers selected by the random number generator including any preferences specified by the customer himself. Moreover, the print head can be controlled to print the ticket number and other information also in form of, for example, a two-dimensional barcode, which provides extra security and prevents misuse of the lottery tickets, since a correct lottery ticket has to bear the ticket number for example in the two-dimensional barcode. The stepper motor driving the drive shaft 78 and conveyor roller 76 is synchronized with the lines printed by the printing head 160.

If a customer has a particular preference for certain numbers or wishes to select a high probability of certain numbers being drawn, then he can advise the sales person and the sales person can enter the respective numbers at the sales person's keypad 32 or, if preferred at the keys of the cash till, assuming these are appropriately connected for this purpose. When the lottery ticket is issued to the customer, further tickets can also be issued on which the customer's preferred numbers are stored. The next time the customer wishes to purchase a lottery ticket he can pass this card to the sales person who can scan it in at the scanner associated with the keypad and then destroy the old ticket with the preferred numbers. This is possible because a new ticket can be issued to the customer with the same numbers on it. This process is not only compatible with the ticket dispenser 11 but also ensures that the customer always has a good quality ticket with his preferred numbers on it.

Ticket, vouchers and coupons without an index hole are handled in the same way as scratch tickets, those with an index hole need not be bent before they can be separated. They are separated as shown, as the index hole shows up at the light barrier of the ticket strip.

When roll paper is processed, it is always printed before it is issued. Each magazine can be adapted to hold one roll of paper in the rear half of the magazine, i.e. at the sales person side 25. Roll paper is normally not perforated and needs to be cut by a sharp knife. Thus, in this case a sharp and hardened cutting blade 100 is spring-loaded and is fixed to a blade holder which replaces the separator. The ticket is sheared by moving the blade holder over a hardened counter blade (not shown). In addition to cutting roll paper, the cutter described immediately above can be used to cut perforated scratch tickets, vouchers and coupons. The scratch tickets have several layers of printing color, which are loosened, during the stamping of the ticket perforations, their cutting with the sharp cutter blade produces more scraps of color splinters than the separator and requires more frequent cleaning of the dispenser.

The cutter chassis is fitted with the paper end sensor which can be used to detect a black stripe on the back side of the roll paper to issue a warning to the sales person that the paper has run out and prohibit any further ticket printing until the paper roll has been refilled.

As mentioned above, when single cards are issued, they can be printed or not printed, depending on what is required. In this case the separator or cutter chassis stay in the parking position and is not activated.

Turning now to Figs. 18, 19 and 20, an explanation will now be given as to how the ticket dispenser 11 is fitted onto its support post 170.

First of all it must be noted that the magazines, either two or three (or a different number if more or less magazines are provided), can only be released from the ticket dispenser 11 when the sales person has inserted a smart card into a special slot (not shown) at the sales persons side 25 of the apparatus. Once this has been done, the sales person can lift away the magazines 34 and the ticket dispenser 11 then appears as shown in Fig. 18, for a ticket dispenser 11 with three magazines. More specifically, the conveyor roller 76 with the central drive shaft 78 can be seen at the bottom of the magazine compartments 172, as can the retracted plungers 182 at the customer side of the first two magazines.

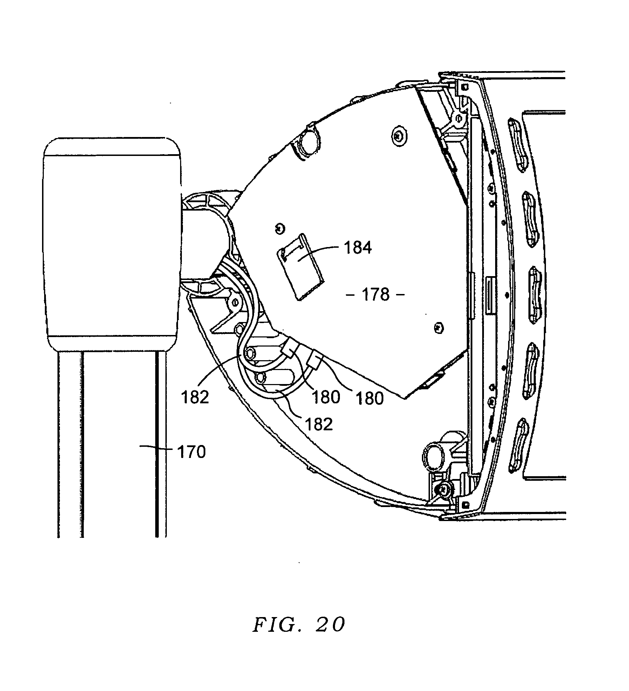

Moreover, a latch arrangement 174 can be seen at the vertical end wall at the right of the ticket dispenser 11 with a catch which can be released by the sales person and which then permits the end cover 176 of the ticket dispenser 11 to be removed at the right-hand side of the ticket dispenser 11 shown in Fig. 18. With the cover removed, the end face 178 of the ticket dispenser 11 at the right-hand side then appears in the manner shown in Figs. 19 and 20. Here, there are removable plug connections 180 on leads 182 which pass through the support post 170 and are connected to the cash till 16 and keypad 32 and to other devices in appropriate manner which will be discussed later. These connections can simply be unplugged. Moreover, there is a SIM card 184 at the end wall 178 of the ticket dispenser 11 which is normally obscured by the cover 176. This SIM card 184 contains amongst other things information relating to the position of the ticket dispenser 11, for example the fourth cash-out desk at the main exit from the supermarket located at a particular site in a particular city. Once the leads 182 have been unplugged and the SIM card has been removed, a screw 186 shown in Fig. 19 can then be accessed and released to allow the ticket dispenser 11 to be slid from the mounting shaft 188 attached to the support post 170. A new ticket dispenser 11 can then be slid into place on the mounting shaft 188 and the SIM card is then replaced into this new ticket dispenser 11 because the new ticket dispenser 11 is now recognized as being at the same position as the old ticket dispenser 11. The old ticket dispenser 11 can then go away for servicing or whatever, while the leads can be connected to the new ticket dispenser 11, the connections can be re-established and it can be locked into position via the screw 186. Then the end cover can be clipped into place again. Thereafter new magazines 34 can be loaded into the ticket dispenser 11 and the operation of the ticket dispenser 11 can then proceed in the manner previously discussed.

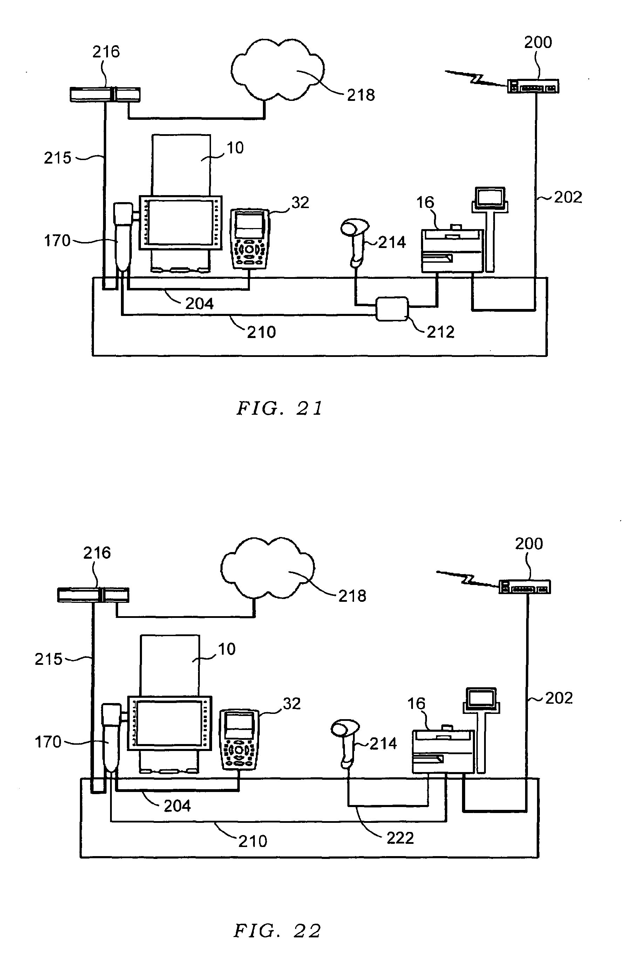

Turning now to Figs. 21, 22, 23 and 24, a description will now be given of various possibilities which exist for linking the ticket dispenser 11 to the cash till and to a retail head office.

It will be appreciated by those skilled in the art that large stores and indeed many retail outlets such as gasoline stations frequently receive updates from a head office, frequently daily, telling them the prices have to be charged for the goods or services they sell.

Fig. 21 shows a first possibility of providing a first link to a retail head office via a modem 200. It can be seen that the lead 202 from the modem passes to the cash till 16. The sales person's keypad 32 is connected to the ticket dispenser 11 by a lead 204 which also passes through the support post 170. Another connection, lead 210, passes from the ticket dispenser 11 through the post 170 to a so-called fusing box 212 to which the sales person' bar code scanner 214 is also attached. The fusing box 212 simply enables signals from either the barcode scanner 214 or from the ticket dispenser 11 to be transmitted to the cash till. In other words, when a customer selects a particular lottery product at the ticket dispenser 11 and the sales person authorizes the issue of a ticket, the price information of the lottery product purchased, which is stored in a memory associated with the ticket dispenser 11, is automatically transmitted via the fusing box 212 to the cash till 16 and is treated there in just the same way as any other product purchased by the customer and scanned by the sales operator using the barcode scanner 216. Alternatively the ticket dispenser 11 transmits the product code of the lottery product and the appropriate price information is stored in the till 16.

The reference numeral 216 represents a router for the internet connection, usually a virtual private network VPN schematically indicated at 218. This connection, which is usually always on line so long as the apparatus 10 is in use, enables communication with the lottery central system of the lottery company.

E.g., if a customer requests a lottery ticket relating to a draw (rather than a pre-numbered scratch card) the numbers printed on the ticket, taking account of the customers favorite and/or preferred numbers, are generally generated locally in a microprocessor embedded in the apparatus 10. The transaction, i.e. the time and date of the purchase of the lottery ticket, the place of purchase, the numbers selected and printed on the lottery ticket as well as a code specific to that lottery ticket, are usually transmitted via the internet to the lottery organizer. Also, in the event of a win, the collection of the win, initiated by the scanning of the lottery ticket at the scanner 60 associated with the keypad is also transmitted via the lead 204, the ticket dispenser 11 and the lead 215 to the internet router 216 for validation of the ticket on-line prior to payment of the win. In some jurisdictions the validation of scratch cards can be done locally, by the business from which the lottery ticket was purchased, or from another business associated with the lottery, in other jurisdictions only online validation of scratch cards is possible.

Scratch cards are provided in known manner with preprinted combinations which are either winning combinations or non-winning combinations. To protect against fraud the cards are generally invalid until they are activated by the business selling them. In the present case this is done by inserting at least one end of the ticket stripe into the ticket dispenser 11 and activating them by a communication to and from the lottery organizer via the internet. As soon as they have been activated the business selling the scratch cards is invoiced for them by the lottery organizer.

Again, wins, or at least larger wins, won by virtue of a winning ticket are communicated to the lottery organizer for validation prior to payment. This is done by scanning the winning number on the scratch card at the scanner 60 associated with the keypad 32, generally also entering a security code on the scratch card by a manual input at the keypad 32, and waiting for the return confirmation via the internet that the ticket and the win are valid.

It is however not necessary to use a fusing box as shown in Fig. 21. Instead the ticket dispenser 11 can be linked to the till by a link 220 operating with a TCP/IP protocol system as shown in Fig. 22. The bar code scanner 214 is also linked to the cash till 16 via a link 222 operating the same protocol. In other respects, the drawing of Fig. 22 is identical to the drawing of Fig. 21 and the description given for the Fig. 21 also applies to Fig. 22 and will not be repeated here. Here, as everywhere else in the specification, parts having the same function or the same design have been consistently identified with the same reference numeral and it will be understood that the description given once in relation to any particular reference numeral also applies to any other drawing showing a part having the same reference numeral, unless something specific is stated to the contrary.

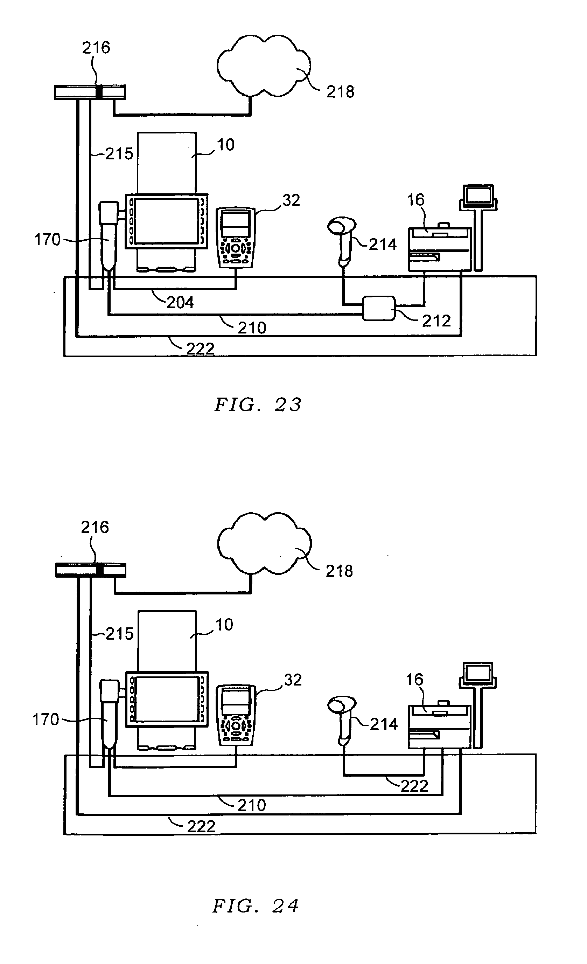

Fig. 23 shows an alternative arrangement. Here the link to the retail head office for bi-directional communication is by ADSL via the internet using a VPN link rather than by modem. Thus a lead 222 passes directly from the cash till to the internet connection 216. The ticket dispenser 11 of the present invention is again linked to the cash till 16 via a fusing box 212 as is the barcode scanner, in the same manner as shown in Fig. 21.

Fig. 24 shows a fourth possibility that is to say the retail head office is linked to the cash till 16 for bi-directional communication by ADSL whereas the ticket dispenser 11 is linked to the cash till by a link operating with a TCP/IP protocol, i.e. separately from the barcode scanner 214 - which operates in the same way, i.e. in the same manner as in Fig. 22.

The arrangements shown in Figs. 21 to 24 are typical of the types of layout which can be used when only a single ticket dispenser 11 and a single cash desk are present at any particular outlet.

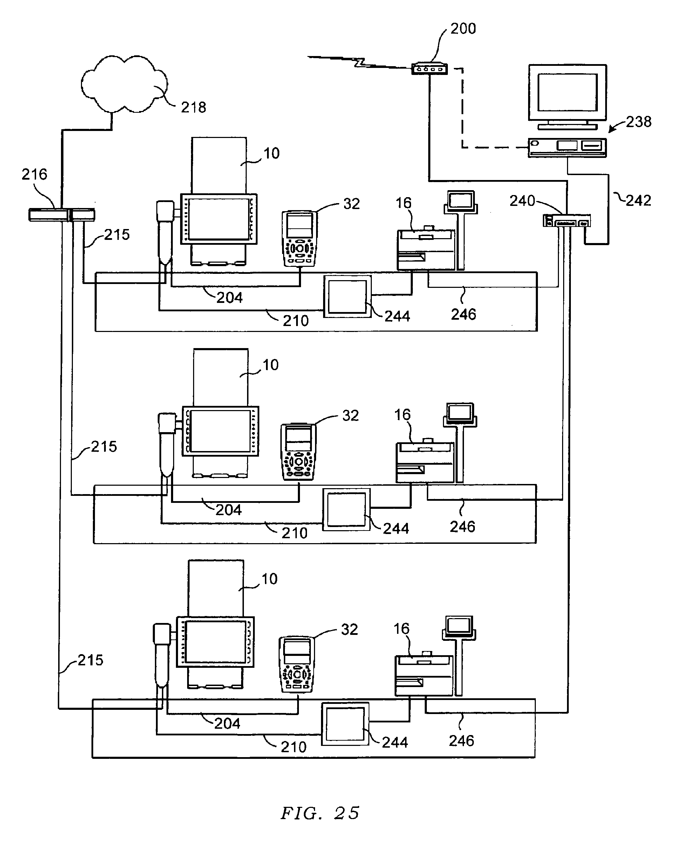

If a plurality of checkout lanes are provided then they can be linked to a retail head office again by modem or by an ADSL link and the respective apparatuses 10 can be linked to the respective cash tills either via a fusing box associated with a barcode scanner or via a link operating a TCP/IP protocol. These possibilities are shown in Figs. 25, 26 and 27 and the reference numerals used in these Figures correspond to those used in the Figs. 21 to 24 as previously explained. Significant differences here are that, in Fig. 25, the head office now communicates with the retail store via the modem 200 which is now connected to a central server 240. Central server is in turn connected via lead 242 to the retail stores management computer 238. Moreover, at each checkout lane, there is now an under-table barcode scanner 242 instead of (or as well as) the hand-held barcode scanner 214 shown in Figs. 21 to 24. The cash till 16 of each checkout lane is connected directly to the central server 240 via a respective lead 246.

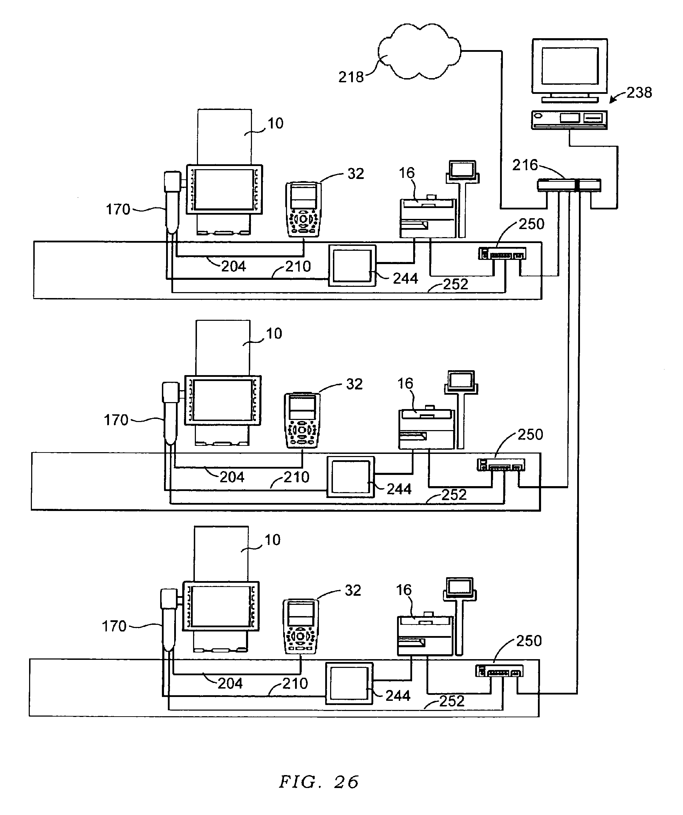

In Fig. 26 the modem 200 is dispensed with and the communication with the retail head office and with the lottery organizer is done via the internet, for example via a VPN link and an ADSL link. The management computer is connected directly to the internet connection 216 as are the individual cash tills 16 via respective interfaces 250. The apparatuses 10 are also connected via a respective lead 252 to the associated interface 250.

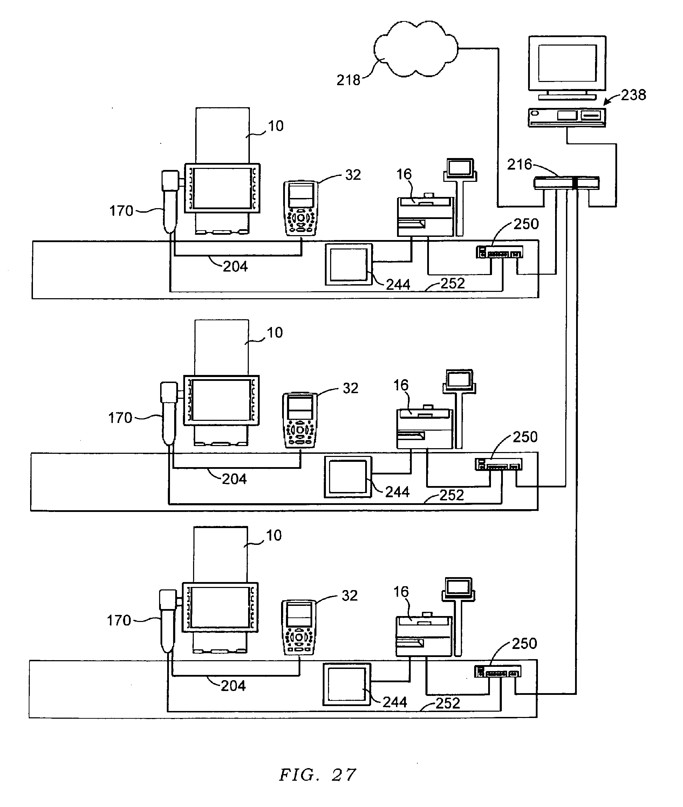

The system of Fig. 27 is very similar to that of Fig. 26 except that each of the apparatuses 10 now has no direct connection to the under-table bar code scanner 244, but is rather connected directly to the respectively associated interface 250.

## Claims

1. An apparatus for use at a point of sale comprising a ticket dispenser having at least one store for receiving at least first and second different tickets, a mechanism for issuing said tickets from said at least one store and a first customer operated input device for inputting a request to said apparatus for the issuing of at least one ticket, said apparatus further comprising a second sales person operated input device optionally integrated into a cash till at the point of sale, or into software associated with said cash till, said sales person operated device being for granting or rejecting a request input by the customer at said apparatus or for granting a verbal request by a customer and for communicating the granting or rejecting of the request to said apparatus and a connection permitting communication of at least one of said apparatus and said second input device with said cash till permitting sale of one or more tickets to be added to a customers purchase list.

2. An apparatus in accordance with claim 1, said apparatus having a customer side and a sales person side, a first outlet with a first output direction for the tickets in said ticket dispenser to the customer side and a second outlet with a second output direction for the tickets in said ticket dispenser to the sales person side.

3. An apparatus in accordance with claim 1 or claim 2, there being a printer associated with said store in said ticket dispenser for applying printing to a ticket before issuing said ticket.

4. An apparatus in accordance with any one of the preceding claims, wherein said store has a plurality of channels each adapted to receive at least first and second different tickets, a respective printer being associated with at least one form of ticket in at least one of said channels.

5. An apparatus in accordance with any one of the preceding claims, wherein said first and second tickets of each said channel can be issued into a conveyor device for further transport to said customer side or to said sales person side, said conveyor device being pivotable to issue a ticket in either of said first and second directions.

6. An apparatus in accordance with claim 5, wherein said conveyor device is operable to move tickets forwardly and backwardly to permit issue of relatively long ticket in either of said first and second directions.

7. An apparatus in accordance with claim 5, wherein a parting mechanism is provided upstream of said conveyor device and adapted to part endless ticket webs of said first and second tickets.

8. An apparatus in accordance with any one of the preceding claims, wherein said tickets are selected from the group comprising endless ticket webs in perforated roll form, endless ticket webs in perforated fan fold form, endless ticket webs in non-perforated roll form, endless ticket webs in non-perforated fan fold form, separated tickets in stack form.

9. Apparatus in accordance with claim 8 wherein said ticket webs and tickets are in one of preprinted form, printable form and preprinted and printable form.

10. An apparatus in accordance with any one of the preceding claims, wherein each channel is a separate magazine.

11. An apparatus in accordance with claim 10 there being a printer associated with said at least one store in said ticket dispenser for applying printing to a ticket before issuing said ticket, said printer being integrated into said magazine.

12. An apparatus in accordance with any one of the preceding claims, wherein a scanner is provided in at least one of said ticket dispenser, said sales person operated input device and said cash till.

13. An apparatus in accordance with any one of the preceding claims, and wherein said ticket dispenser comprises a main body, a shaft supporting said main body, said main body incorporating a ticket handling mechanism, ticket printing mechanism, a customer input device, a SIM card storing the installation and/or revenue data for the operators and electrical connections for power, networking and communication with said device and said cash till and said scanner and said shaft carrying mating electrical connections for removable attachment to the first said connections associated with said main body, there being a mechanically releasable connection between said main body and said shaft whereby said main body and associated components can be exchangeably connected to said shaft and said SIM card being transferable from one main body to another.

14. An apparatus in accordance with claim 13, wherein said main body holds at least one removable magazine and said removable magazine is transferable to an exchange main body mountable on said shaft.

15. An apparatus in accordance with claim 14, wherein said mechanically releasable connection between said main body and said shaft is preferably only accessible when at least one said magazine is removed from said main body and wherein said main body optionally includes an electronically latchable mechanism for releasably latching the or each said magazine to said main body, said electronically latchable mechanism being activatable by a smart card.
